Europäisches Patentamt

European Patent Office

Office européen des brevets

(19)

(11) **EP 0 904 317 B1**

(12) **FASCICULE DE BREVET EUROPEEN**

(45) Date de publication et mention
de la délivrance du brevet:
**28.03.2001 Bulletin 2001/13**

(51) Int Cl.[7]: **C08J 11/24**, C08G 18/42
// C08L67:02

(21) Numéro de dépôt: **97927229.1**

(22) Date de dépôt: **04.06.1997**

(86) Numéro de dépôt international:
**PCT/FR97/00984**

(87) Numéro de publication internationale:
**WO 97/46611 (11.12.1997 Gazette 1997/53)**

(54) **PROCEDE D'OBTENTION DE POLYOLS ET POLYOLS OBTENUS SELON LE PROCEDE**

VERFAHREN ZUR RÜCKGEWINNUNG VON POLYOLEN UND NACH DIESEM VERFAHREN
HERGESTELLTE POLYOLE

METHOD FOR OBTAINING POLYOLS AND POLYOL THUS OBTAINED.

(84) Etats contractants désignés:
**AT BE CH DE DK ES FI FR GB GR IE IT LI LU MC
NL PT SE**

(30) Priorité: **04.06.1996 FR 9607031**

(43) Date de publication de la demande:
**31.03.1999 Bulletin 1999/13**

(73) Titulaire: **Techniques du batiment et de l'industrie
S.A.R.L.
63910 Vertaizon (FR)**

(72) Inventeurs:
• **DURAND, Gérard
F-78230 Le Pecq (FR)**
• **HUBERT, Franck
F-91590 Cerny (FR)**

• **MARECHAL, Jean-Charles
F-38240 Meylan (FR)**
• **MIGEON, Hélène
F-69300 Caluire (FR)**
• **TERSAC, Gilles
F-91750 Champcueil (FR)**

(74) Mandataire: **Chanet, Jacques
56, avenue de Royat
B.P. 27
63401 Chamalières Cédex (FR)**

(56) Documents cités:
**EP-A- 0 710 686      US-A- 3 488 298
US-A- 3 907 868      US-A- 4 758 607
US-A- 5 266 601      US-A- 5 451 611**

Printed by Jouve, 75001 PARIS (FR)

## Description

La présente invention est du domaine de la chimie et elle a pour objet un procédé général d'obtention de polyols particulièrement de polyestérols, à partir de polyéthylènetéréphtalate (PET), en particulier de PET résiduel de fabrication ou déchet de consommation, des variantes à ce procédé et les produits obtenus, notamment destinés à la fabrication de matériaux cellulaires tels que mousses de polyuréthannes (PUR), et de polyisocyanurates (PIR).

On rappelle que l'on connaît depuis longtemps la manière de préparer des polyols par dégradation des polyéthylènetéréphtalates par la réaction inverse, dite "glycolyse", de celle de leur synthèse, suivant laquelle le PET est chauffé en présence d'un excès de glycol (GLY), par exemple le monoéthylèneglycol (MEG); des inconvénients majeurs des polyols ainsi obtenus au regard de leur destination sont leur propension à précipiter des solides au cours de leur stockage à température ordinaire, ainsi que leur viscosité élevée.

Un art antérieur récent a proposé diverses solutions pour tenter de remédier à ces inconvénients :par exemple les brevets DE-3.435.014 (BAUER), EP-0.248.578 (BENTLEY et al.), US-4.539.341 (HALLMARK), US-4.559.370 (BLANPIED), US-4.652.591 et US-4.714.717 (LONDRIGAN) ont proposé une esterification des polyols obtenus, tandis que les brevets EP-0.134.661 (CHARDONOL), US-4.485.196 (SPERANZA), US-4.604.410 et US-4.701.477 (ALTENBERG) ont proposé de les modifier par ethoxypropoxylation; d'autres brevets tels que US-4.468.824 (GRIGSBY), US-4.485.196 (SPERANZA), US-4.536.522 (GRIGSBY), US-4.459.370 (BLANPIED), US-4.642.319 (MCDANIEL), US-4.644.019 (MCDANIEL), US-4.714.717 (LONDRIGAN), US-4.760.100 (MCDANIEL), Chem.Abs-151.159 (PENCZEK) ont proposé d'opérer la distillation du MEG au fur et à mesure de sa formation résultant de la glycolyse.

Toutefois les polyols obtenus par les procédés précités sont des mélanges de polyols présentant une grande hétérogénéité, ou dispersion, dans leurs poids moléculaires et conduisent de ce fait, lors de leur réticulation en PUR ou PIR, à des réseaux tridimensionnels irréguliers, ce qui est généralement considéré comme une caractéristique défavorable résultant de la présence d'oligomères supérieurs à faible indice d'hydroxyle (<200 mg KOH/g) et de glycols libres à indice d'hydroxyle élevé (>800 mg KOH/g); il a en outre été constaté (G.TERSAC et al. in CELLULAR POLYMERS, Vol.14, p.14, 1995) une autre conséquence fâcheuse de cette hétérogénéité, à savoir une augmentation sensible de la viscosité.

Une solution pour limiter la formation d'oligomères supérieurs consisterait à effectuer la glycolyse/estérification, à rapport molaire élevé des restes glycols par rapport aux restes diacides, puis à éliminer les glycols libres, par distillation; mais on se retrouverait alors dans un système chimiquement déséquilibré, et des réactions d'alcoolyse tendraient à reformer des glycols libres ainsi que des espèces plus condensées.

Un brevet US-4.758.607 (HALLMARK) décrit un procédé permettant d'éliminer les glycols libres, sans qu'il se reforme du MEG par réaction de rééquilibrage; les polyols ainsi obtenus ont un très faible taux de MEG libre, ils sont moins visqueux, présentent une meilleure stabilité au stockage et conduisent à des mousses de plus forte densité. Cependant le procédé a l'inconvénient d'exiger une distillation sous vide poussé, en continu et en film raclé, ce qui nécessite une installation très coûteuse. Ce brevet cite de nombreux exemples de glycols et de polyols de faible poids moléculaire qui peuvent être utilisés comme agents glycolysants, ainsi que de nombreux pluriacides qui peuvent être pris comme art antérieur de la présente Demande; on notera toutefois que le catalyseur de glycolyse cité (tetrabutylorthotitanate) ne convient pas pour la mise en oeuvre de l'invention.

On rappelle que la réaction de glycolyse est une réaction équilibrée du type transesterification; des catalyseurs de cette réaction sont bien connus de l'art; on pourra se référer par exemple à U.S.-2.465.319 (WINFIELD) qui cite des sels tels que les acétates de manganèse et de zinc ou encore des amines telles que les triéthyl- et tributylamine; cette catalyse de la glycolyse, et de la transestérification concomitante, est bien mentionnée dans le brevet US-3.907.868 (CURRIE).

Ce dernier brevet divulgue aussi la manière d'éviter le rééquilibrage de la réaction en désactivant (séquestrant) le catalyseur au moyen d'agents tels que l'acide phosphorique, l'acide phosphoreux, les esters aryliques, alcoyliques, cycloalcoyliques, arylalcoyliques de ces acides, les acides carboxyliques aliphatiques et aromatiques tels les acides oxalique, citrique, tartrique, téréphtalique, les sels tétrasodiques de l'acide éthylène-diamine-tétracétique, l'acide phénylphosphinique, ainsi que les produits analogues ; il est cependant important de noter que la technique divulguée par cette publication n'est pas celle de la présente invention et ne la suggère pas, n'ayant pas les mêmes objectifs, ci-après énumérés, puisqu'elle vise à obtenir à partir du PET, non pas des polyols mais le diméthyltéréphtalate; les agents de désactivation cités dans cette publication sont cependant pris comme art antérieur de la présente Demande.

D'une manière générale tant les glycols en tant que réactifs de glycolyse, que les catalyseurs de glycolyse ou de transesterification et que les agents désactivants cités dans les publications sus mentionnés sont considérés comme réactifs susceptibles de convenir dans la mise en oeuvre de la présente invention.

Le but général de la présente invention est de proposer un procédé d'obtention de polyols, plus précisément de polyestérols, à dispersion molaire étroite, à partir de déchets de PET, dans des réacteurs simples et pourvus de moyens de mise sous vide peu poussé, par exemple compris entre 1 et 50 mmHg.

Des objectifs plus particuliers de l'invention consistent en :

- l'obtention de polyols liquides, stables au stockage, de viscosité suffisamment faible pour en permettre une manipulation aisée, et aptes à la préparation de matériaux cellulaires PUR ou PIR à pouvoir isolant thermique fort et durable;
- l'obtention de polyols présentant une bonne capacité de solubilisation des chlorofluorohydrocarbures (HCFC) porogènes (agents gonflants) en particulier le HCFC 141b, à savoir au moins 20% en poids de HCFC 141b, sans que pour autant le HCFC 141b gazeux contenu dans les cellules ne puisse se dissoudre ultérieurement dans la matrice PUR ou PIR, donc des polyols conduisant à une matrice PUR ou PIR ayant une faible affinité pour les HCFC;
- l'obtention de polyols à distribution molaire étroite, c'est à dire des polyesterdiols essentiellement constitués d'oligomères polyesters "monomères" et "dimères" et contenant très peu d'oligomères supérieurs et de glycols libres;
- l'obtention de polyols ayant une teneur réduite, en glycols libres difonctionnels, compatibles avec des polyols multifonctionnels pouvant conduire à des réseaux PUR rigides après addition de quantités limitées de polyols multifonctionnels;
- l'obtention de polyols de fonctionnalité supérieure à deux, à distribution molaire étroite;
- l'obtention de polyols dans des réacteurs simples c'est à dire des capacités pourvues seulement de moyens d'agitation, d'introduction d'atmosphère inerte ($N_2$), de chauffage jusqu'à 220-240°C, de reflux total ou de distillation, de remplissage et de soutirage, et pouvant fonctionner à pression atmosphérique et sous vide (pression de 3 mmHg et plus);
- l'obtention de polyols par un procédé mettant en oeuvre une distillation des glycols libres et permettant un recyclage interne du distillat;
- enfin l'obtention de polyols par un procédé basé sur la glycolyse/estérification du PET avec des temps de réaction courts et une distillation de glycols libres n'entraînant pas de réactions de rééquilibrage.

Selon l'invention, un procédé d'obtention de polyols, consistant dans une première étape à faire réagir des glycols, c'est à dire des plurialcools de fonctionnalité au moins égale à deux (MEG, DEG, DPG, ...), sur du polyéthylènetéréphtalate (PET) en présence d'un catalyseur (CAT) de glycolyl transestérification puis, dans une dernière étape, à distiller les glycols libres (ou libérés), est caractérisé dans sa généralité en ce qu'une étape postérieure à la première et antérieure ou simultanée à la dite dernière étape, comprend la désactivation du catalyseur de glycolyse par un agent désactivant (DES).

Suivant une première variante (I) du procédé général, une seconde étape, dite d'estérification, consécutive à la première étape de glycolyse, consiste à introduire dans le milieu glycolisé un pluriacide (PLA) ou ses dérivés (anhydrides, ...) tels que par exemple l'acide adipique, l'anhydride phtalique, etc.

De préférence on choisit pour catalyser la réaction d'estérification de la seconde étape de cette première variante du procédé, un acide fort, tel que l'acide phosphorique $H_3PO_4$, qui puisse constituer en même temps un agent désactivant (DES) du catalyseur de l'étape précédente (glycolyse).

L'étape d'estérification, conduite sous pression atmosphérique mais sous atmosphère inerte, peut s'accompagner de formation d'eau qui distille.

L'étape suivante consiste en la distillation sous vide peu poussé (3 à 40 mmHg) des glycols libres formés au cours des étapes précédentes, distillation qui laisse dans l'enceinte de réaction les polyols recherchés ; selon l'indice d'hydroxyle ($I_{OH}$) recherché pour ces derniers, on poussera d'autant plus longtemps la distillation que l'on recherchera un $I_{OH}$ faible ($200 \leq I_{OH} \leq 400$, $1h < t < 3h$).

Suivant une seconde variante (II) du procédé général, la seconde étape, d'estérification, consiste à introduire dans le milieu glycolisé un/des pluriesters (PLE) tels que des diméthylesters (AGS), ou encore tels que le mélange "RHODIASOLV (marque déposée)" de RHONE-POULENC (diméthyladipate, diméthylglutarate, diméthylsuccinate).

L'étape suivante de distillation, sous vide peu poussé (3 à 40 mmHg), est précédée de l'introduction dans le milieu réactionnel, de l'agent désactivant (DES); celui-ci est, de préférence encore, l'acide phosphorique; il pourrait aussi être un dérivé organique du phosphore, mais avec une efficacité plus faible.

On notera que, toujours selon l'invention, les glycols distillés peuvent être recyclés lors d'un cycle suivant.

Selon une troisième variante (III) permettant d'atteindre l'objectif précité d'obtenir des polyols de fonctionnalité supérieure à deux, on met en oeuvre pour effectuer la glycolyse, en plus de DEG et de DPG, des plurialcools de fonctionnalité supérieure à deux, par exemple des triols tels que le glycérol (GLR); cette variante, dans laquelle une quantité maximale, par rapport aux autres variantes, du PET introduit est transformée en polyols, ou autrement dit, dans laquelle le rapport R, ou rendement,

$$R = \frac{\text{polyols produits}}{\text{PET introduit}}$$

est maximal, est une variante particulièrement intéressante du point de vue économique

Selon une quatrième variante (IV), proche de la précédente, on met en outre en oeuvre, pour opérer une réaction de transtérification, un mélange (AGS) de diméthylesters; cette variante, un peu moins économique que la précédente, permet d'obtenir un produit de viscosité plus faible.

La présente invention sera mieux comprise, et des détails en relevant apparaîtront, à la description qui va être faite d'exemples du procédé dans chacune de ses variantes, en se référant aux figures et tableaux des planches annexées dans lesquelles :

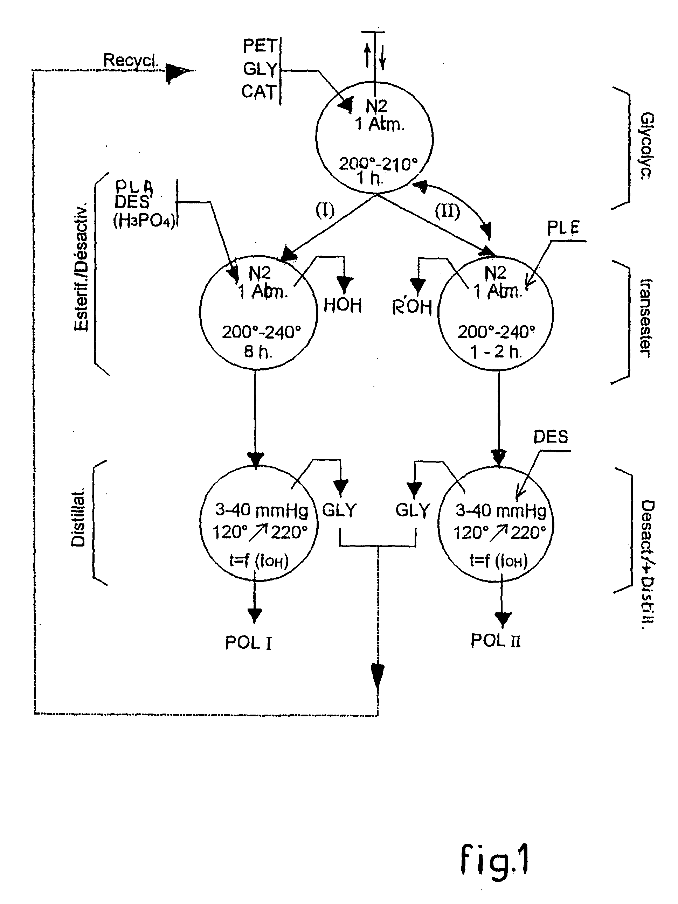

- la fig.1 est un organigramme du procédé dans ses variantes I et II,

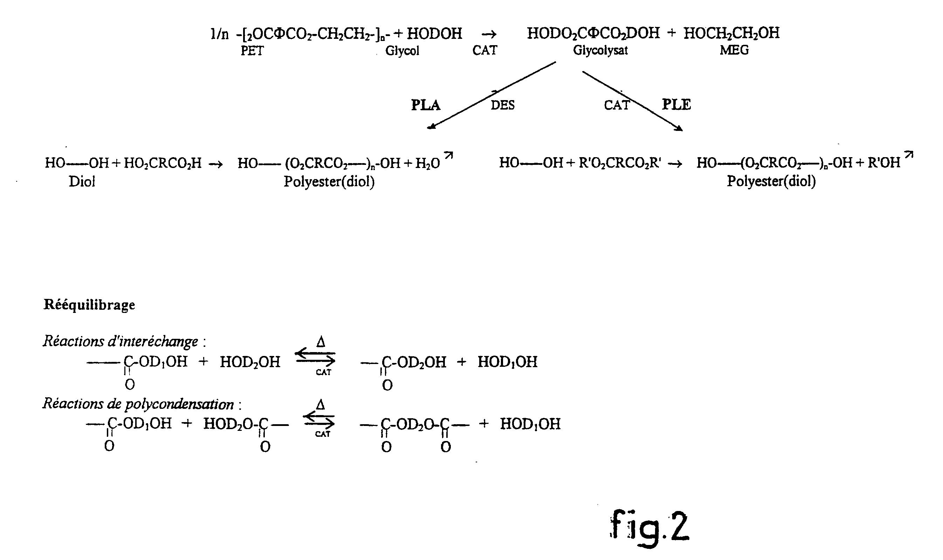

- la fig.2 expose les réactions entrant en jeu dans le procédé de la fig.1,
- le tableau I fournit des caractéristiques et compositions de polyols obtenus selon le procédé de l'invention, et
- le tableau II fournit des caractéristiques de mousses PUR/PIR formées à partir de polyols obtenus suivant le procédé de l'invention.

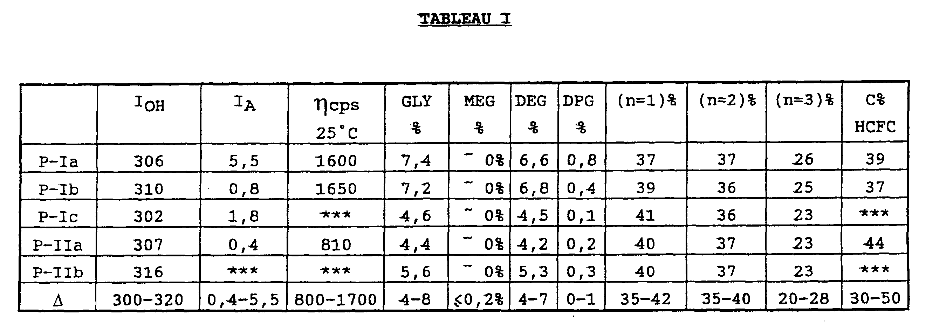

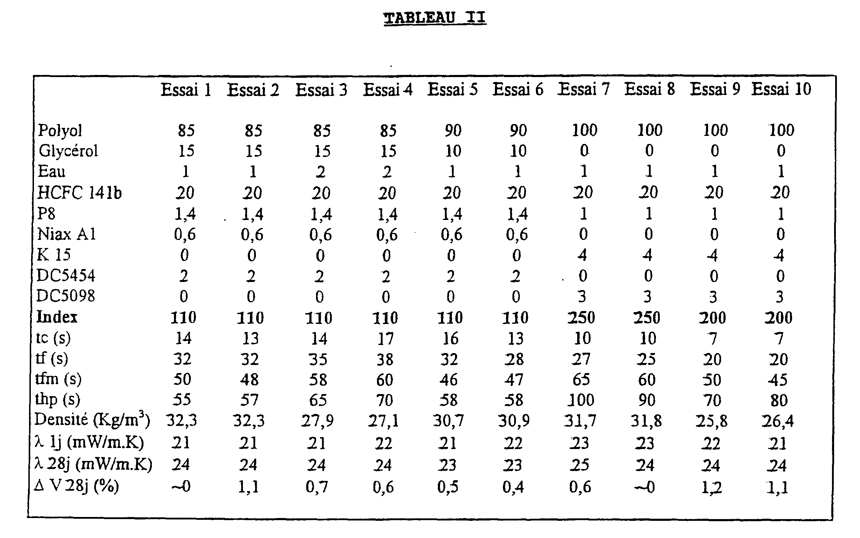

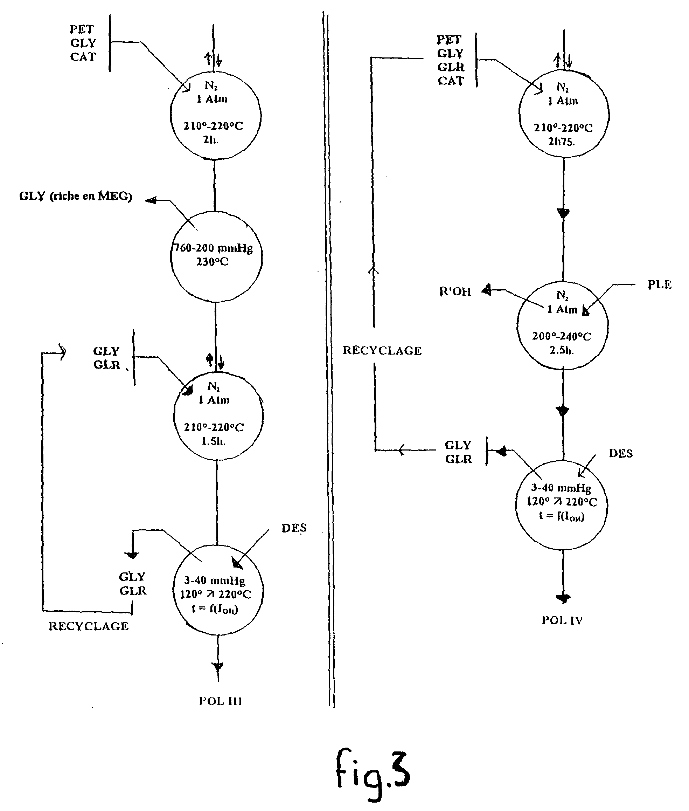

- la fig 3 est un organigramme du procédé dans ses variantes III et IV,
- les diagrammes des fig.4 à 9 illustrent des compositions de la phase polyestérol dans des exemples des variantes I à IV avant et après distillation.

EXEMPLE 1, (de mise en oeuvre de la première variante) (distillation des glycols libres après désactivation du catalyseur)

Dans un réacteur muni d'un agitateur, d'une entrée d'azote, d'un condenseur à reflux total, on introduit :

PET : 119 g (0,62 mole) (polyéthylènetéréphtalate sous forme de copeaux provenant de déchets de fabrication de préformes de bouteilles),
DEG : 321 g (3,03 mole) (diethylèneglycol),
DPG : 109,2 g (0,815 mole) (dipropylèneglycol)
CAT : 0,12 g (0,49 mmole) (acétate de manganèse (Mn(OAc)$_2$,4H$_2$O).

On chauffe à 220°C pendant 2 heure en atmosphère d'azote sous reflux total; puis, après avoir remplacé le condenseur à reflux total par un système de distillation, on ajoute au milieu réactionnel :

Acide adipique : 36,2 g (0,248 mole),
Anhydride phtalique : 36,7 g (0,248 mole), et
Acide phosphorique (H$_3$PO$_4$ à 85%) : 0,45 g (2,5 mmole).

On chauffe à 200-240°C, avec distillation de l'eau formée; la durée est d'environ 5 heure.
Le polyol intermédiaire obtenu possède les caractéristiques suivantes :

I$_{OH}$ (mg KOH/g) : 595
I$_A$ (mg KOH/g) : 4,5
glycols libres : 45,2 % (déterminés par chromatographie gazeuse,
    dont :

    MEG : 2,4 %
    DEG : 29 %
    DPG : 13,8 %

polyestérols : 54,8 %, ayant la composition suivante (mesurés par chromatographie d'exclusion stérique, détecteur UV) :

    monomères (n=1) : 39,5 %
    dimères (n=2): 37,5 %
    oligomères sup. (n≥3) : 23 %

On place alors l'enceinte réactionnelle sous vide d'environ 4 mmHg et on procède à la distillation des glycols libres de 570 g du polyol intermédiaire, pendant une durée de 2,5 heure au cours de laquelle la température du bouilleur varie progressivement de 140 à 160°C;
On recueille 228 g d'un distillat composé de :

MEG : 6 %,
DEG : 61,5 %
DPG : 32,5 %

Le résidu de distillation est constitué d'un mélange, dit Polyol-Ia, formé de glycols libres et de polyesterols, dont les proportions et caractéristiques sont données ci-après :

$I_{OH}$ (mg KOH/g) : 306
$I_A$ (mg KOH/g) : 5,5
$\eta_{25°C}$ (cPs) : 1600
glycols libres : 7,4 % dont :

MEG : $\simeq$ 0 %
DEG : 6,6 %
DPG : 0,8 %

polyestérols : 92,6 % dont

monomères (n=1) : 37 %
dimères (n=2): 37 %
oligomères sup. (n≥3) : 26 %

REMARQUE relative à l'exemple 1

A titre de démonstration de l'intérêt de l'invention, un polyol préparé de manière identique (à ceci près que le catalyseur est l'orthotitanate de tétrabutyle (Ti(OBu)$_4$), mais sans ajout d'agent désactivant, après obtention de 235 g d'un distillat composé de :

MEG : 11,7 %
DEG : 54,9 %
DPG : 33,5%

est constitué de :
glycols libres : 12,8 % dont :

MEG : $\simeq$ 0 %
DEG : 10,2 %
DPG : 2,6%

Polyestérols : 87,2 %, composés de :

monomère (n=1) : 23 %
dimères (n=2): 23 %
oligomères sup. (n≥3) : 54 %

On remarque que la proportion d'oligomères supérieurs a nettement augmenté après la distillation (54% au lieu de 23%) de même que la quantité de MEG (235x11,7% = 27,5 g au lieu de 570x2,4% = 13,7 g) ce qui montre qu'il s'est produit un rééquilibrage.

Au contraire, dans le cas de la préparation du Polyol-Ia, la composition des polyestérols n'a pratiquement pas changé après la distillation, et la quantité de MEG distillée (228x6% = 13,7 g) est égale à la quantité présente avant distillation (570x2,4% = =13,7 g), prouvant ainsi qu'il ne s'est pas produit de rééquilibrage, et cela grâce à la mise en oeuvre du procédé de l'invention.

EXEMPLE 2 (de mise en oeuvre de la première variante) (recyclage du distillat)

Dans un réacteur muni d'un agitateur, d'une entrée d'azote, d'un condenseur à reflux total, on introduit :

- PET : 119 g (0,62 mole) (polyéthylène-téréphtalate sous forme de copeaux provenant de déchets de fabrication de "préformes" de bouteilles,

- MEG : 38,5 g (0,62 mole)
- DEG : 269,3 g (2,54 mole) (diethylèneglycol),
- DPG : 91,6 g (0,68 mole) (dipropylèneglycol)
- Anh. phtalique : 36,7 g (0,248 mole)
- Acide adipique : 36,2 g (0,248 mole),
- CAT : 0,12 g (0,49 mmole) (acétate de manganèse (Mn(OAc)$_2$.4H$_2$O).

On chauffe à 220°C pendant 2 heure en atmosphère d'azote sous reflux total; puis, après avoir remplacé le condenseur à reflux total par un système de distillation, on ajoute au milieu réactionnel :

- Acide phosphorique (H$_3$PO$_4$ à 85%): 0,45 g (2,5 mmole).

On chauffe à 200-240°C, avec distillation de l'eau formée; la durée est d'environ 7,5 heure.

On place alors l'enceinte réactionnelle sous vide d'environ 3 mmHg et on procède à la distillation des glycols libres, de 555,3 g de polyol intermédiaire pendant une durée de 3 heure au cours de laquelle la température du bouilleur varie progressivement de 135 à 175°C et la température en tête de colonne de 89 à 120°C;

On recueille 213,6 g d'un distillat composé de :

- MEG : 14,9 %
- DEG : 55 %
- DPG : 30 %

et un résidu, référencé comme Polyol-Ib, possédant les caractéristiques et composition suivantes :

I$_{OH}$ (mg KOH/g) : 310
I$_A$ (mg KOH/g): 0,8
$\eta_{25°C}$ (cPs) : 1650 .
glycols libres : 7,2% dont

MEG : $\simeq$ 0 %
DEG : 6,8 %
DPG : 0,4 %

polyestérols : 92,8 %, composés de :

monomère (n=1) : 39 %
dimères (n=2): 36 %
oligomères sup. (n≥3) : 25 %

Compatibilité avec HCFC 141b : 37 %.

L'analyse du distillat montre que la quantité de MEG distillée est inférieure ou égale à la quantité initialement introduite de MEG libre (213,6x14,9% = 31,8 g au lieu de 38,5 g).

On ajoute à 200 g du distillat ci-dessus (recyclage) les quantités de glycols purs suivantes:

- MEG : 8,9 g
- DEG : 159,3 g
- DPG : 31,6 g

de façon à retrouver des quantités de glycols libres identiques à celles initialement introduites et avec les mêmes proportions par rapport aux autres réactifs, et l'on recommence les opérations; on obtient en fin d'opérations un polyol référencé comme Polyol-Ic possédant les caractéristiques et composition suivantes :

I$_{OH}$ (mg KOH/g): 302
I$_A$(mg KOH/g): 1,8
glycols libres : 4,6 %, composés de :

MEG : $\simeq$ 0 % (identique)
DEG : 4,5 %
DPG : 0,1 %

polyestérols : 95,4 %, composés de :

monomère (n=1) : 41 %
dimères (n=2): 36 %
oligomères sup. (n$\geq$3) : 23 %

On obtient donc des caractéristiques sensiblement identiques en utilisant le distillat en lieu et place d'un mélange des glycols purs; on en conclu que le distillat est tout à fait recyclable et que la composition des polyols obtenus par recyclage des glycols libres, est constante.

EXEMPLE 3 (de mise en oeuvre de la seconde variante) (estérification par des diméthylesters, distillation finale sous 2 mmHg)

Dans un réacteur muni d'une agitation, d'une entrée d'azote, d'un condenseur à reflux total, on introduit :

- PET : 119 g (0,62 mole) de copeaux provenant de déchets de fabrication de préformes de bouteilles,
- DEG: 321,1 g (3,03 mole),
- DPG :109,2 g de (0,815 mole),
- CAT : 0,12 g (0,49 mmole) d'acétate de manganèse (Mn(OAc)$_2$.4H$_2$O);

on chauffe à 220°C pendant 2 heure en atmosphère d'azote sous reflux total; puis, après avoir remplacé le condenseur à reflux total par un système de distillation, on ajoute au milieu réactionnel :

- 78,7 g (0,495 mole) d'un mélange (AGS) des diméthylesters suivants :
- diméthyladipate: $\simeq$ 16 % en poids
- diméthylglutarate: $\simeq$ 60 % "
- diméthylsuccinate : $\simeq$ 24 % "

On chauffe à 200°C; il se produit une réaction de transestérification avec distillation de méthanol; la température augmente progressivement jusqu'à 240°C, jusqu'à cessation de la production de méthanol, soit après environ 1,8 heure.
Après refroidissement, on ajoute 0,17 g d'acide phosphorique à 85 %, soit 1,5 mmole, pour désactiver le catalyseur, et on procède à la distillation des glycols libres de 579,4 g du polyol intermédiaire, sous 3 mmHg avec augmentation progressive sur 1 heure de la température du bouilleur qui passe de 125 à 180°C, et en tête de colonne de 82 à 118°C.
On recueille 236,6 g de distillat composé de :

- MEG : 6,8 %
- DEG : 60,5 %
- DPG : 32,6 %,

tandis que le résidu, référencé comme Polyol-IIa, possède les caractéristiques et la composition suivante:

I$_{OH}$ (mgKOH/g) : 307
I$_A$ (mgKOH/g) : 0,4
$\eta_{25°C}$ (cPs) : 810
glycols libres : 4,4 % dont :

MEG : $\sim$ 0%
DEG : 4,2 %
DPG : 0,2 %

polyestérols 95,6 %, composés de:

monomère (n=1) : 40 %
dimères (n=2): 37 %
oligomères sup. (n≥3) : 23 %

compatibilité avec le HCFC 141b : 44 %

EXEMPLE 4, (de mise en oeuvre de la seconde variante) (estérification par des diméthylesters, distillation finale sous 28-30 mmHg)

Dans des conditions opératoires analogues à celles sus mentionnées, mais avec une pression de distillation de 28-30 mmHg et après distillation de 232,9 g de glycols, la température du bouilleur ayant passé en 1,3 heure de 160 à 200°C, et en tête de colonne de 125 à 148°C, le résidu obtenu, référencé comme Polyol-IIb, a les caractéristiques suivantes :

$I_{OH}$ (mgKOH/g): 316
$I_A$ (mgKOH/g): 0,4
glycols libres : 5,6 % dont :

MEG : ~ 0 %
DEG : 5,3 %
DPG : 0,3 %

polyestérols 94,4 %, composés de :

monomères (n=1): 40 %
dimères (n=2): 37 %
oligomères sup. (n≥3): 23 %

Le tableau I de l'annexe résume les caractéristiques des divers polyols obtenus dans les exemples, et fournit leurs fourchettes de variation (Δ).
Ces fourchettes de caractéristiques identifiant, séparément ou en combinaison, les polyols d'intérêt pratique pour lesquels l'invention apporte un progrès notable, sont les suivantes :

$I_{OH}$ (mgKOH/g): 300 - 320, jusqu'à 200 - 400,
$I_A$ (mgKOH/g): 0,4 - 0,5, jusqu'à 0,1 - 10,
$\eta_{25°C}$ (cPs) : 800 - 1700, jusqu'à 500 - 5000,
glycols libres : 4% - 8%, jusqu'à 0% - 10%, composés de:

MEG : < 0,2 %
DEG : 4 - 7% jusqu'à 2 - 10%
DPG : 0 - 1% jusqu'à 0 - 3 %, et de

polyestérols (mesurés par chromatographie d'exclusion stérique, détecteur UV) formant de 90% à 100% en poids, du polyol, et composés de :

monomères (n=1):35 - 42%, soit >35 %
oligomères sup. (n≥3):20 - 28% soit <35 %
Compatibilité avec le HCFC 141b : 20 - 50 %

EXEMPLE 5 (de préparation de mousse de polyuréthane et polyisocyanurate, à partir du Polyol-Ia)

Les formulations sont exprimées en masses relatives à 100 g de mélange de polyols; le porogène est le HCFC 141b (FORANE F 141b de ELF-ATOCHEM); les catalyseurs sont la diméthylcyclohéxylamine (P8 de AIR PRODUCTS), le bis-(2-diméthylaminoéthyl)éther (NIAX A1 de UNION CARBIDE) et l'octoate de potassium (K 15 de AIR PRODUCTS), les tensioactifs sont des copolymères poly(éther/siloxane) (DC 5454 et DC 5098 de AIR PRODUCTS)
L'isocyanate mélangé au Polyol-Ib pour la formation de mousse est un PMDI (4,4'-diisocyanate de diphénylméthane), le SUPRASEC DNR de ICI, un polyisocyanate de fonctionnalité de 2,7; le PMDI est mélangé au "polyol formulé" dans la quantité correspondant à l'index désiré; le mélange est effectué par brassage mécanique à 4000 tours/minute pendant 10 secondes; le mélange réactif est versé dans un sac, l'expansion est libre.

La réactivité du polyol formulé est appréciée par le temps de crème (tc), par le temps de fil (tf), par le temps de fin de montée (tfm) et par le temps hors poisse (thp).

Les mousses résultantes sont jugées par la mesure, à 1 jour après leur élaboration, de leur densité (NFT 56107) et de leur conductibilité thermique (ISO 2581); l'évolution des caractéristiques est appréciée par comparaison, après 28 jours à température ordinaire, de la conductibilité thermique initiale (I1j) et après stabilisation (I28j), et par le retrait dimensionnel (Dv28j); le TABLEAU II de l'annexe fournit les résultats.

Les analyses des polyesterols par chromatographie d'exclusion stérique montrent qu'il ne s'est pas produit de rééquilibrage au cours de la deuxième distillation.

Les mousses polyuréthanes et polyisocyanurates obtenues sont remarquablement bien adaptées à l'isolation thermique, leur cellularité est très fine et la stabilité de leurs propriétés est remarquable.

EXEMPLE 6 (de mise en oeuvre de la troisième variante (III))

Dans un réacteur muni d'une agitation, d'une entrée d'azote, d'un système permettant soit d'effectuer un soutirage de distillat soit d'établir un reflux total, on introduit:

PET :    288g(1,50 mol)
DEG :    195,6g(1,845 mol)
CAT :    0,27g(1,1 mmole)d'acétate de manganèse

On chauffe à 220°C pendant 2 heure en atmosphère d'azote sous reflux total puis on établit progressivement un vide partiel et on soutire un distillat. En fin d'opération la pression est de 200 mmHg et la température du réacteur de 230°C. Le distillat D1 obtenu est composé de :

MEG :    54,2%
DEG :    45,8%

Après refroidissement on ajoute,

DEG :    180,2g(1,70 mol)
DPG      134,09(1,00 mol)
GLR      55,2g(0,60 mol)

Toujours sous atmosphère d'azote, on effectue à nouveau une alcoolyse à T = 220°C pendant 1,5 heure. Puis on ajoute 0,40g d'acide phosphorique à 85 %, soit 4 mmole pour désactiver le catalyseur et on procède à la distillation des glycols libres sous 10 mmHg avec augmentation progressive sur 1 heure de la température du mélange qui passe de 132°C à 181°C, et en tête de colonne de 114°C à 134°C. On recueille 453,4g de polyol et 264,0g de glycols libres (distillat D2).

La composition du distillat D2 est:

MEG :    7,9 %
DEG :    60,8 %
DPG :    28,2 %
GLR :    3,1 %

tandis que le polyol final possède les caractéristiques suivantes :

| | |
|---|---|
| $I_{0H}$ (mgKOH/g) | 339 |
| $I_A$(mgKOH/g) | 1,2 |
| $\eta_{25°C}$ (cPs) | 15200 |
| Glycols libres | 5,9 % dont : |
| | MEG :     0 |
| | DEG :     1,8 % |
| | DPG :     0 |
| | GLR :     4,1% |

(suite)

| Polyesterols | 94,1 % composés de : | |
|---|---|---|
| | monomères (n=1) : | 44 % |
| | dimères (n=2) : | 36 % |
| | oligomères sup (n≥3) : | 20 % |

Ainsi dans cette variante III on procède à la suite de la glycolyse et avant introduction de l'agent désactivant et distillation des glycols libres, en premier lieu à une distillation à température élevée d'une partie des glycols libres, ce qui permet l'élimination d'une forte proportion de MEG, et en second lieu, éventuellement, à une nouvelle étape de transestérification à la suite d'un ajout supplémentaire de glycols et de plurialcools de fonctionnalité f>2.

EXEMPLE 7 (de mise en oeuvre de la quatrième variante(IV))

Dans un réacteur muni d'une agitation, d'une entrée d'azote, d'un condensateur à reflux total, on introduit:

PET :    238 g        (1,24 mol)
DEG :    64,2 g       (6,06 mol)
DPG :    218,4 g       (1,63 mol)
GLR :    68,0 g       (0,74 mol)
CAT :    0,24 g       (0,49 mmole)

On chauffe à 220°C pendant 2h 45 en atmosphère d'azote sous reflux total.
Puis après avoir remplacé le condensateur à reflux total par un système de distillation, on ajoute au milieu réactionnel :157,4g (0,99 mol) d'un mélange de diméthylesters (AGS) de composition suivante :

diméthyladipate :        16 % en poids
diméthylglutarate :       60 % en poids
diméthylsuccinate :       24% en poids

On chauffe à 200°C, il se produit une réaction de transestérification avec distillation de méthanol. La température augmente progressivement jusqu'à 240°C, jusqu'à cessation de la production de méthanol, soit environ après 2,5 heure.
Après refroidissement, on ajoute 0,34g d'acide phosphorique à 85% (3,0 mmole) pour désactiver le catalyseur et on procède à la distillation des glycols libres sous 10 mmHg avec augmentation progressive sur 1,25 heure, de la température du bouilleur qui passe de 117,5°C à 180°C et en tête de colonne de 105°C à 134°C. On recueille 561,6g de distillat composé de:

MEG :   10,0%
DEG :   63,7%
DPG :   23,9%
GLR :   2,4%

tandis que le polyol final, référencé comme polyol IV, possède les caractéristiques et la composition suivantes :

| $I_{OH}$ (mgKOH/g) | 299 | |
|---|---|---|
| $I_A$ (mgKOH/g) | 0,61 | |
| $\eta_{25°C}$ (cPs) | 1350 | |
| Glycols libres | 4,3% dont: | |
| | MEG | 0,1% |
| | DEG | 2,3% |
| | DPG | 0 |
| | Glycérol | 1,9% |
| Polyesterols | 95,7% composés de : | |
| | monomères (n=1) | 49% |
| | dimères (n=2) | 36% |

## EP 0 904 317 B1

(suite)

| oligomères sup. (n≥3) | 15% |
|---|---|

Ainsi dans cette variante IV, on met en outre en oeuvre, pour effectuer la glycolyse, en plus du DEG et du DPG, d'une part des plurialcools de fonctionnalité f>2, et, par la suite, une transestérification au moyen d'un mélange AGS de diméthylesters.

Les diagrammes des figures qui suivent illustrent l'évolution de la composition de la phase polyestérols obtenue, avant (graphe —) et après (graphe ······) la distillation finale; l'analyse de la composition de la phase polyesterol du polyol a été effectuée par chromatographie d'exclusion stérique couplée avec un détecteur UV; pour les chromatogrammes relatifs à l'exemple 1 et à la remarque associée à cet exemple, on a utilisé une colonne "LICROGEL PS4 (5 µm) de MERCK; pour tous les autres chromatogrammes on a utilisé une colonne SDV 100Å MZ..

Grâce à l'étalonnage des colonnes avec un mélange DGT+BDT (cf. Thèse F.HUBERT, "valorisation chimique de déchets polyéthylènetéréphtalate en matériaux polyuréthane pour isolation thermique" E.C.P., Octobre 1996), on peut déterminer les quantités respectives d'oligomères (n≥3), de dimères et de monomères.

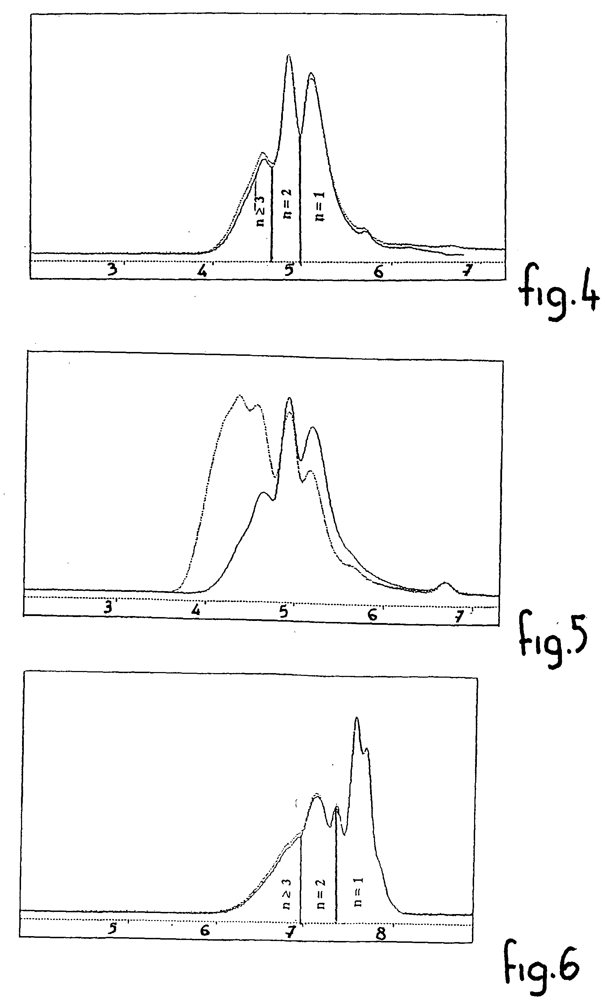

Le diagramme de la fig.4, correspond à l'exemple 1 de mise en oeuvre de la première variante,

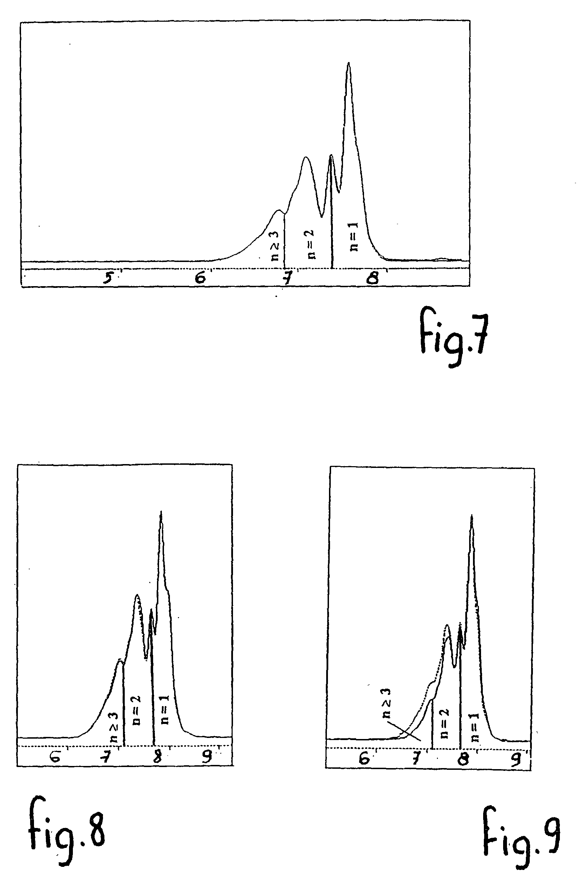

Sur le diagramme de la fig.5 qui est à rapprocher de celui de la figure précédente, on remarque un décalage important vers le début de l'élution, dû à la forte présence d'oligomères supérieurs résultant du rééquilibrage en présence de désactivant DES.

Le diagramme de la fig.6, correspond à l'exemple 2 de mise en oeuvre de la première variante.

Le diagramme de la fig.7, correspondant à l'exemple 3 de mise en oeuvre de la deuxième variante.

Le diagramme de la fig.8, correspondant à l'exemple 6 de mise en oeuvre de la troisième variante.

Le diagramme de la fig.9, correspondant à l'exemple 7 de mise en oeuvre de la quatrième variante.

Les formes de ces diagrammes, desquels sont déduites les compositions en % des polyestérols des exemples sus décrits, sont caractéristiques du procédé de l'invention et sont un indice de sa mise en oeuvre pour un mélange de polyesterols.

L'invention trouve une application particulièrement avantageuse dans l'isolation thermique, des bâtiments notamment.

Bien que l'on ait décrit des exemples d'obtention de polyols suivant le procédé de l'invention, ainsi que des exemples de préparation de mousses à partir d'un de ces polyols, il doit être compris que la portée de cette dernière n'est pas limitée à ces exemples, mais qu'elle s'étend à toute forme de mise en oeuvre du procédé et de ses applications, telle que la règle en est définie plus haut de façon générale.

## Revendications

1. Procédé d'obtention de polyols, consistant dans une première étape à faire réagir des glycols, c'est à dire des plurialcools de fonctionnalité au moins égale à deux (MEG, DEG, DPG, ...) sur du polyéthylènetéréphtalate (PET) en présence d'un catalyseur (CAT) de glycolyse/transestérification, puis, dans une dernière étape, à distiller les glycols libres, caractérisé :

   en ce qu'une étape postérieure à la première et antérieure ou simultanée à la dite dernière étape, comprend la désactivation du catalyseur de glycolyse par un agent désactivant (DES).
   d'où il résulte :
   en premier lieu, une distribution molaire remarquablement étroite des polyols obtenus et/ou l'absence de réactions de rééquilibrage
   en second lieu, que la distillation finale des glycols libres peut être effectuée sans rééquilibrage, sous un vide peu poussé (3 mmHg<P<30 mmHg) n'exigeant qu'une installation ordinaire;

2. Procédé d'obtention de polyols selon la revendication 1, caractérisé :

   en ce que le catalyseur (CAT) de la réaction de glycolyse est l'un des agents du groupe comprenant l'acétate de zinc et l'acétate de manganèse, les amines telles que la triéthylamine et tributylamine, et
   en ce que l'agent désactivant (DES) de la réaction de désactivation est l'un des agents du groupe comprenant l'acide phosphorique, l'acide phosphoreux, les esters aryliques, alcoyliques, cycloalcoyliques, arylalcoyliques de ces acides, les acides carboxyliques aliphatiques et aromatiques tels les acides oxalique, citrique, tartrique, téréphtalique, les sels tétrasodiques de l'acide éthylène-diamine-tétracétique, l'acide phénylphosphinique;

**3.** Procédé d'obtention de polyols selon la revendication 2, caractérisé :
en ce que l'agent désactivant choisi est l'acide phosphorique à 85%;

**4.** Procédé d'obtention de polyols selon la revendication 1, caractérisé :
en ce que (variante (I)) une seconde étape, dite d'estérification, consécutive à la première étape de glycolyse, consiste :

à introduire dans le milieu glycolisé un pluriacide (PLA) et/ou ses dérivés (anhydrides, ...) et l'agent désactivant (DES), puis
à porter le milieu réactionnel à une température comprise entre 170 et 240°C sous atmosphère inerte, en distillant l'eau formée, et
en ce que la dernière étape consiste à distiller sous vide (3 mmHg < P < 40 mmHg) à une température comprise entre 120 et 220°C, les glycols libres;

**5.** Procédé d'obtention de polyols selon la revendication 1, caractérisé :

en ce que (variante (II)) la seconde étape, ou étape d'estérification, consiste à introduire dans le milieu glycolisé un/des pluriesters (PLE), et (simultanément, préalablement ou consécutivement) à porter le milieu réactionnel à une température comprise entre 170 et 240°C sous atmosphère inerte, en distillant l'alcool formé, puis
à introduire dans le milieu réactionnel, l'agent désactivant (DES), puis,
constituant la dernière étape, à distiller sous vide (3 mmHg $\leq$ P $\leq$ 40 mmHg) à une température comprise entre 120 et 220°C, les glycols libres;

**6.** Polyol obtenu selon un procédé conforme à l'une quelconque des revendications précédentes, caractérisé :
en ce qu'il comporte les caractéristiques et composition suivantes :

- $I_{OH}$ : compris entre : 200 et 400 mgKOH/g,
- $I_A$ compris entre : 0,1 et 10 mgKOH/g
- $\eta_{25°C}$ (cPs) compris entre : 500 et 5000,
- Compatibilité HCFC 141b : comprise entre 20 - 50 %.
- glycols libres (mesurés par chromatographie gazeuse) compris entre : 0 et 10%, dont
  MEG inférieur à 0,3 %,
- polyestérols formant entre: 92 et 100% du poids du polyol de composition (mesurée par chromatographie d'exclusion stérique, détecteur UV) :

monomères (n=1) : > 35 %,
oligomères sup.(n$\geq$3) : < 35 %;

**7.** Polyol obtenu selon la revendication 3 et conforme à la revendication 6, caractérisé
en ce qu'il comporte en outre, au moins à l'état de traces, :

- l'un au moins des corps du groupe comprenant le manganèse (Mn) et le zinc (Zn), comme reste du catalyseur (CAT), et
- du phosphore (P) comme reste de l'agent désactivant (DES).

**8.** Procédé d'obtention de polyols selon la revendication 1, caractérisé :
en ce que (variante III) , avant introduction de l'agent désactivant et distillation des glycols libres:

- on procède, à la suite de la glycolyse, à une distillation à température élevée d'une partie des glycols libres, ce qui permet l'élimination d'une forte proportion de MEG, et
- en second lieu on procède à une nouvelle étape de transestérification à la suite d'un ajout de glycols et de plurialcools de fonctionnalité f>2;

**9.** Procédé d'obtention de polyols selon la revendication 8, caractérisé :
en ce qu'un plurialcool de fonctionnalité supérieure à deux est le glycérol (GLR);

**10.** Procédé d'obtention de polyols selon la revendication 1, caractérisé :
en ce que (variante IV) on met en outre en oeuvre pour effectuer la glycolyse, en plus du DEG et du DPG, d'une part des plurialcools de fonctionnalité f>2, et, par la suite, une transestérification au moyen d'un mélange, dit AGS, de diméthylesters.

## Claims

1. A method for obtaining polyols, consisting of a first step in reacting glycols, i.e. polyalcohols of a functionality at least equal to two (MEG, DEG, DPG, ...) on the polyethylene terephtalate (PET) in the presence of a catalyst (CAT) of glycolysis/transesterification then, in a last step, to distill the free glycols, characterized :
in that a step following to the first step and before or simultaneously to the said last step comprises the deactivation of the glycolysis catalyst by a deactivating agent (DES),
from where there results :

in the first place, a substantially narrow molar distribution of the obtained polyols and/or the absence of reequilibrating reactions,
in the second place, that the final distillation of the free glycols can be carried out without rebalancing, under low vacuum (3 mmHg < P <30 mmHg) requiring only an ordinary installation.

2. The method for obtaining polyols according to claim 1, characterized :

in that the catalyst (CAT) of the glycolysis reaction is a member of the group consisting of zinc acetate and manganese acetate, amines such as the triethyl amine and tributyl amine, and
in that the deactivating agent (DES) of the deactivating reaction is a member of the group consisting of phosphoric acid, phosphorous acid, arylic esters, alkylic esters, cycloalkylic esters, arylalkylic esters of these acids, aliphatic and aromatic carboxylic acids such as oxalic acids, citric acids, tartaric acids, terephthalic acids, the tetrasodic salts of ethylene diaminetetracetic acid, phenylphosphinic acid.

3. The method for obtaining polyols according to claim 2, characterized :
in that the selected deactivating agent is phosphoric acid at 85%.

4. The method for obtaining polyols according to claim 1, characterized :

in that (variant (I)) a second step, called esterification, following to the first step of glycolysis comprises introducing into the glycolyzed mzdium a polyacid (PLA)) and/or its derivatives (anhydrides,...) and the deactivating agent (DES), then
bringing the reactive medium to a temperature comprised between 170 and 240°C under inert atmosphere, by distilling the formed water, and
in that the last step comprises in distilling the free glycols under vacuum (3 mmHG < P < 40 mmHG) at a temperature comprised between 120 and 220°C ;

5. The method for obtaining polyols according to claim 1, characterized :

in that (variant II) the second step, or esterification step, comprises introducing into the glycolyzed medium a polyester (PLE) and (simultaneously, beforehand or consecutively) bringing the reactive medium to a temperature disposed between 170 and 240°C under inert atmosphere, by distilling the formed alcohol, then introducing the deactivating agent (DES) into the reactive medium, then,
constituting the last step, to distill the free glycols under vacuum ($3 \text{ mmHg} \leq P \leq 40 \text{ mmHg}$) at a temperature disposed between 120 and 220°C.

6. A polyol obtained according to a method corresponding to any one of the preceding claims, characterized : in that it comprises the following characteristics and composition :

- $I_{OH}$ : comprised between : 200 and 400 mg KOH/g
- $I_A$ comprised between : 0.1 and 10 mg KOH/g
- $\eta$ 25°C (cPs) comprised between : 500 and 5000,
- Compatibility HCFC 141b : comprised between 20- 50%%
- free glycols (measured by gaseous chromatography) comprised between : 0 and 10%, where MEG is less than 0.3%,

**EP 0 904 317 B1**

- polyesterols forming between : 92 and 100 % of the weight of the polyol of composition (measured by steric exclusion chromatography, UV detector) :
  monomers (n = 1) : > 35%
  higher oligomers (n ≥ 3) : < 35 %.

7. The polyol according to claim 3 and corresponding to claim 6, characterized
   in that it comprises, at least at the trace state

   - at least one of the bodies of the group comprising the manganese (Mn) and the zinc (Zn), as rest of the catalyst (CAT), and
   - phosphorous (P) as rest of the deactivating agent (DES).

8. A method for obtaining polyols according to claim 1, characterized :
   in that variant (III), before introduction of the deactivating agent and distillation of the free glycols :

   - one proceeds following to the glycolysis to a distillation at high temperature of one part of the free glycols, which allows elimination of a large proportion of MEG, and
   - secondly, one proceeds to a new step of transesterification following an addition of glycols and of polyalcohols having a functionality of f > 2.

9. The method for obtaining polyols according to claim 8, characterized :
   in that a polyalcohol having a functionality higher-than two is the glycerol (GLR).

10. The method for obtainig polyols according to claim 1, characterized :
    in that (variant IV) one carries out, to perform the glycolysis, in addition to the DEG and to the DPG, on the one hand polyalcohols having a functionality of f > 2 and in the following a transesterification by means of a mixture, said AGS, of dimethyl esters.


**Patentansprüche**

1. Verfahren zur Darstellung von Polyolen, das aus einer ersten Stufe besteht, in der man Glykole, d.h. mehrwertige Alkohole mit einer Funktionalität mindestens gleich zwei (MEG, DEG, DPG, ...), in Gegenwart eines Glykolyse/ Transesterifikations-Katalysators (CAT) zur Umesterung auf Polyethylenterephthalat (PET) reagieren lässt, und man dann in einer letzten Stufe die freien Glykole destilliert, dadurch gekennzeichnet,
   dass eine Stufe, die später als die erste Stufe und früher als die oder gleichzeitig mit der besagten letzten Stufe abläuft, die Desaktivierung des Glykolysekatalysators durch ein Desaktivierungsmittel (DES) umfasst, woraus sich ergibt:
   an erster Stelle eine bemerkenswert schmale molare Verteilung der erhaltenen Polyole und/oder das Ausbleiben von Reaktionen zur Wiederherstellung des Gleichgewichts
   und an zweiter Stelle, dass die endgültige Destillation der freien Glykole ohne Wiederherstellung des Gleichgewichts in einem Niedervakuum (3 mm Hg < p < 30 mm Hg) erfolgen kann, wofür nur eine gewöhnliche Ausrüstung erforderlich ist.

2. Verfahren zur Darstellung von Polyolen nach Anspruch 1, dadurch gekennzeichnet,

   dass der Katalysator (CAT) der Glykolysereaktion eines der Mittel aus der Gruppe ist, die das Zinkazetat und das Manganazetat, die Amine wie das Triethylamin und das Tributylamin umfasst, und
   dass das Desaktivierungsmittel (DES) der Desaktivierungsreaktion eines der Mittel aus der Gruppe ist, die die Phosphorsäure, die phosphorige Säure; die Aryl-, Alkyl-, Cycloalkyl- und Arylalkylester dieser Säuren; die aliphatischen und aromatischen Karboxylsäuren wie die Oxal-, Zitronen-, Wein- und Terephthalsäure; die Na-4-Salze der Ethylendiamintetraessigsäure und der Phenylphosphinsäure umfasst.

3. Verfahren zur Darstellung von Polyolen nach Anspruch 2, dadurch gekennzeichnet,
   dass das Desaktivierungsmittel 85-%ige Phosphorsäure ist.

4. Verfahren zur Darstellung von Polyolen nach Anspruch 1, dadurch gekennzeichnet,

dass (Variante (I)) eine zweite Stufe, Veresterung genannt, die der ersten Stufe der Glykolyse folgt, darin besteht, dass

in das glykolisierte Medium eine mehrwertige Säure (PLA) und/oder ihre Derivate (Anhydrite, ...) und das Desaktivierungsmittel (DES) gebracht werden, und dass

dann das Reaktionsmedium auf eine Temperatur zwischen 170 und 240 °C in einer Inertatmosphäre gebracht wird, wobei das entstehende Wasser abdestilliert wird, und dadurch gekennzeichnet,

dass die letzte Stufe darin besteht, im Vakuum (3 mm Hg < p < 40 mm Hg) bei einer Temperatur zwischen 120 und 220 °C die freien Glykole zu destillieren;

**5.** Verfahren zur Darstellung von Polyolen nach Anspruch 1, dadurch gekennzeichnet,

dass (Variante (II) die zweite Stufe, oder Veresterungsstufe, darin besteht, in das glykolisierte Medium einen oder mehrere mehrwertige Ester (PLE) zu bringen und (gleichzeitig, vorher oder anschließend) das Reaktionsmedium auf eine Temperatur zwischen 170 und 240 °C in einer Inertatmosphäre zu bringen, wobei der gebildete Alkohol abdestilliert wird, dann

in das Reaktionsmedium das Desaktivierungsmittel (DES) zu bringen, dann,

was die letzte Stufe bildet, im Vakuum (3 mm Hg $\leq$ p $\leq$ 40 mm Hg) bei einer Temperatur zwischen 120 und 220 °C die freien Glykole zu destillieren.

**6.** Polyol, der nach einem Verfahren gemäß einem beliebigen der oben genannten Ansprüche hergestellt wurde, dadurch gekennzeichnet,

dass er die folgenden Kenndaten und Zusammensetzung aufweist:

- $I_{OH}$: zwischen 200 und 400 mg KOH/g
- $I_A$: zwischen 0,1 und 10 mg KOH/g
- $\eta_{25°C}$ (Zentipoise): zwischen 500 und 5000
- FCKW-Verträglichkeit 141b: zwischen 20 - 50 %
- freie Glykole (mittels Gaschromatographie gemessen): zwischen 0 und 10 %,
    daher MEG kleiner als 0,3 %
- sich bildende Polyesterole: zwischen 92 und 100 Gew.-% des Verbindungspolyols (gemessen durch sterische Ausschluss-Chromatographie, UV-Detektor):

    Monomere (n = 1):      > 35 %
    Höhere Oligomere (n $\geq$ 3) < 35 %

**7.** Polyol, dargestellt nach Anspruch 3 und gemäß Anspruch 6, dadurch gekennzeichnet,
    dass er außerdem, zumindest in Spurenmengen enthält:

- mindestens einen Körper aus der Gruppe, die Mangan (Mn) und Zink (Zn) als Rest des Katalysators (CAT) umfasst,
- Phosphor (P) als Rest des Desaktivierungsmittels (DES).

**8.** Verfahren zur Darstellung von Polyolen nach Anspruch 1, dadurch gekennzeichnet,

dass (Variante III) man vor dem Einführen des Desaktivierungsmittels und der Destillation der freien Glykole im Anschluss an die Glykolyse eine Destillation eines Teils der freien Glykole bei erhöhter Temperatur durchführt, was die Eliminierung eines starken Anteils an MEG ermöglicht, und

an zweiter Stelle man im Anschluss an eine Zugabe von Glykolen und mehrwertigen Alkoholen der Funktionalität f > 2 eine erneute Stufe der Umesterung vornimmt.

**9.** Verfahren zur Darstellung von Polyolen nach Anspruch 8, dadurch gekennzeichnet,
    dass ein mehrwertiger Alkohol der Funktionalität größer als zwei Glycerin (GLR) ist.

**10.** Verfahren zur Darstellung von Polyolen nach Anspruch 1, dadurch gekennzeichnet,
    dass (Variante IV) man außerdem zur Durchführung der Glykolyse über einerseits das DEG oder DPG hinaus mehrwertige Alkohole der Funktionalität f > 2 einsetzt und folglich eine Umesterung mittels eines genannten Gemisches AGS aus Dimethylestern vornimmt.

fig.1

$$1/n \; -[_2OC\Phi CO_2-CH_2CH_2-]_n- + HODOH \xrightarrow[CAT]{} HODO_2C\Phi CO_2DOH + HOCH_2CH_2OH$$

PET     Glycol       Glycolysat       MEG

**PLA**    DES        CAT    **PLE**

$$HO\!-\!\!-\!(O_2CRCO_2\!-\!)_n\!-\!OH + H_2O \nearrow$$
Polyester(diol)

$$HO\!-\!\!-\!OH + R'O_2CRCO_2R' \rightarrow HO\!-\!\!-\!(O_2CRCO_2\!-\!)_n\!-\!OH + R'OH \nearrow$$
Polyester(diol)

$$HO\!-\!\!-\!OH + HO_2CRCO_2H \rightarrow HO\!-\!\!-\!(O_2CRCO_2\!-\!)_n\!-\!OH + H_2O \nearrow$$
Diol                Polyester(diol)

**Rééquilibrage**

*Réactions d'interéchange :*

$$-\underset{O}{\overset{O}{\underset{\|}{C}}}\!-OD_1OH + HOD_2OH \underset{CAT}{\overset{\Delta}{\rightleftharpoons}} -\underset{O}{\overset{O}{\underset{\|}{C}}}\!-OD_2OH + HOD_1OH$$

*Réactions de polycondensation :*

$$-\underset{O}{\overset{O}{\underset{\|}{C}}}\!-OD_1OH + HOD_2O-\underset{O}{\overset{O}{\underset{\|}{C}}}\!- \underset{CAT}{\overset{\Delta}{\rightleftharpoons}} -\underset{O}{\overset{O}{\underset{\|}{C}}}\!-OD_2O-\underset{O}{\overset{O}{\underset{\|}{C}}}\!- + HOD_1OH$$

# fig.2

17

## TABLEAU I

| | $I_{OH}$ | $I_A$ | $\eta$cps 25°C | GLY % | MEG % | DEG % | DPG % | (n=1)% | (n=2)% | (n=3)% | C% HCFC |
|---|---|---|---|---|---|---|---|---|---|---|---|
| P-Ia | 306 | 5,5 | 1600 | 7,4 | ~ 0% | 6,6 | 0,8 | 37 | 37 | 26 | 39 |
| P-Ib | 310 | 0,8 | 1650 | 7,2 | ~ 0% | 6,8 | 0,4 | 39 | 36 | 25 | 37 |
| P-Ic | 302 | 1,8 | *** | 4,6 | ~ 0% | 4,5 | 0,1 | 41 | 36 | 23 | *** |
| P-IIa | 307 | 0,4 | 810 | 4,4 | ~ 0% | 4,2 | 0,2 | 40 | 37 | 23 | 44 |
| P-IIb | 316 | *** | *** | 5,6 | ~ 0% | 5,3 | 0,3 | 40 | 37 | 23 | *** |
| Δ | 300-320 | 0,4-5,5 | 800-1700 | 4-8 | ≤0,2% | 4-7 | 0-1 | 35-42 | 35-40 | 20-28 | 30-50 |

## TABLEAU II

| | Essai 1 | Essai 2 | Essai 3 | Essai 4 | Essai 5 | Essai 6 | Essai 7 | Essai 8 | Essai 9 | Essai 10 |
|---|---|---|---|---|---|---|---|---|---|---|
| Polyol | 85 | 85 | 85 | 85 | 90 | 90 | 100 | 100 | 100 | 100 |
| Glycérol | 15 | 15 | 15 | 15 | 10 | 10 | 0 | 0 | 0 | 0 |
| Eau | 1 | 1 | 2 | 2 | 1 | 1 | 1 | 1 | 1 | 1 |
| HCFC 141b | 20 | 20 | 20 | 20 | 20 | 20 | 20 | 20 | 20 | 20 |
| P8 | 1,4 | 1,4 | 1,4 | 1,4 | 1,4 | 1,4 | 1 | 1 | 1 | 1 |
| Niax A1 | 0,6 | 0,6 | 0,6 | 0,6 | 0,6 | 0,6 | 0 | 0 | 0 | 0 |
| K 15 | 0 | 0 | 0 | 0 | 0 | 0 | 4 | 4 | 4 | 4 |
| DC5454 | 2 | 2 | 2 | 2 | 2 | 2 | 0 | 0 | 0 | 0 |
| DC5098 | 0 | 0 | 0 | 0 | 0 | 0 | 3 | 3 | 3 | 3 |
| **Index** | 110 | 110 | 110 | 110 | 110 | 110 | 250 | 250 | 200 | 200 |
| tc (s) | 14 | 13 | 14 | 17 | 16 | 13 | 10 | 10 | 7 | 7 |
| tf (s) | 32 | 32 | 35 | 38 | 32 | 28 | 27 | 25 | 20 | 20 |
| tfm (s) | 50 | 48 | 58 | 60 | 46 | 47 | 65 | 60 | 50 | 45 |
| thp (s) | 55 | 57 | 65 | 70 | 58 | 58 | 100 | 90 | 70 | 80 |
| Densité (Kg/m³) | 32,3 | 32,3 | 27,9 | 27,1 | 30,7 | 30,9 | 31,7 | 31,8 | 25,8 | 26,4 |
| λ 1j (mW/m.K) | 21 | 21 | 21 | 22 | 21 | 22 | 23 | 23 | 22 | 21 |
| λ 28j (mW/m.K) | 24 | 24 | 24 | 24 | 23 | 23 | 25 | 24 | 24 | 24 |
| Δ V 28j (%) | ~0 | 1,1 | 0,7 | 0,6 | 0,5 | 0,4 | 0,6 | ~0 | 1,2 | 1,1 |

PET
GLY
CAT

N₂
1 Atm

210°-220°C
2h.

GLY (riche en MEG)

760-200 mmHg
230°C

GLY
GLR

N₂
1 Atm

210°-220°C
1.5h.

GLY
GLR

RECYCLAGE

DES

3-40 mmHg
120° ↗ 220°C
t = f(I_OH)

POL III

PET
GLY
GLR
CAT

N₂
1 Atm

210°-220°C
2h75.

R'OH

N₂
1 Atm

200°-240°C
2.5h.

PLE

RECYCLAGE

GLY
GLR

DES

3-40 mmHg
120° ↗ 220°C
t = f(I_OH)

POL IV

fig.3

fig.4

fig.5

fig.6

21

fig.7

fig.8

fig.9